Europäisches Patentamt

European Patent Office

Office européen des brevets

(11) Numéro de publication: **0 267 163**
**A1**

## (12) DEMANDE DE BREVET EUROPEEN

(21) Numéro de dépôt: **87830309.8**

(22) Date de dépôt: **11.08.87**

(51) Int. Cl.⁴: **A 01 G 9/02**
**C 21 C 5/52, H 05 B 7/11**

(30) Priorité: **12.08.86 IT 2279386**

(43) Date de publication de la demande:
**11.05.88 Bulletin 88/19**

(84) Etats contractants désignés: **BE ES FR NL**

(71) Demandeur: **NINO-SANREMO S.n.c. di francesco, Mauro, Rinaldo SARTORE**
**Via G. D'Annunzio, 81**
**SANREMO (Imperia) (IT)**

(72) Inventeur: **Sartore, Francesco**
**Via G. Leopardi, 13 A**
**I-Sanremo (Imperia) (IT)**

**Sartore, Rinaldo**
**Via Gozo Superiore, 43**
**I-Sanremo (Imperia) (IT)**

(74) Mandataire: **Caregaro, Silvio et al**
**c/o Società Italiana Brevetti S.p.A. Via Carducci 8**
**I-20123 Milano (IT)**

(54) Elément pour relier l'une à l'autre des plantes pour culture lesquelles sont disposées dans un unique pot, afin d'empêcher l'enlèvement de ce dernier d'une ou plus d'elles.

㉗ Elément pour relier à l'une l'autre des plantes cultivées en pot disposées cans un seul pot, afin qu'il ne soit pas possible d'extraire de ce dernier une ou plusieurs de ces plantes, constitué d'un corps essentiellement en forme de plaque (1) doté d'un nombre de trous (2) égal au nombre des plantes cultivées dans le pot, lesquels présentent un diamètre tel que les plantes puissent pousser librement.

Fig.2

EP 0 267 163 A1

BAD ORIGINAL

## Description

"ELEMENT POUR RELIER L'UNE A L'AUTRE DES PLANTES POUR CULTURE LESQUELLES SONT DISPOSEES DANS UN UNIQUE POT, AFIN D'EMPECHER L'ENLEVEMENT DE CE DERNIER D'UNE OU PLUS D'ELLES"

La présente invention concerne un élément apte à réaliser le raccordement réciproque de plusieurs plantes de culture disposées dans un seul pot, dans le but d'empêcher qu'une ou plusieurs de ces plantes ne soient extraites du pot.

On connaît l'habitude des producteurs de plantes cultivées en pot de disposer plusieurs plantes, généralement de la même variété, dans un seul récipient, ceci permettant de réduire considérablement le temps nécessaire pour obtenir un produit présentant un degré de floraison appréciable, suffisant pour pouvoir être vendu.

On sait en effet que l'on peut considérer à première vue une constante le temps nécessaire à la floraison d'une plante de culture. Toutefois si l'on dispose plusieurs plantes de culture dans un même pot, l'effet global de floraison que l'on obtient apparaît déjà en moins de temps qu'il ne faut à la floraison de la plante individuelle. De recherches particulières conduites par les cultivateurs de plantes en pot, il ressort que le temps de culture diminue de deux à trois mois, ceci entraînant évidemment de considérables économies.

D'autre part, on dispose plusieurs plantes de culture dans un seul pot pour des compositions florales à but ornemental, et dans ce cas on utilise des plantes de différentes variétés de façon à obtenir un effet chromatique très sensible sur le plan esthétique.

Toutefois, lorsque ces produits sont vendus par le producteur, le risque est fréquent qu'une plante soit enlevée pour être vendue séparément, ou même que toutes les plantes d'un pot soient disposées chacune dans un pot pour être vendue séparément. Ceci se fait naturellement dans un but lucratif, étant donné que le coût d'un pot comprenant par exemple trois plantes est certainement inférieur à celui de trois pots ayant chacun une plante.

Un autre inconvénient existant dans la culture des plantes dérive du fait qu'il faut fixer des plaquettes ou étiquettes spéciales aux plantes, soit pour que figure le nom du producteur soit pour indiquer de quelle variété il s'agit.

Il existe actuellement différentes façons d'apposer les étiquettes en question, mais l'on sait qu'elles s'usent rapidement ou se détachent, ce qui rend leur conservation extrêmement difficile.

Il a été à présent conçu, et ceci constitue l'objet de la présente invention, un élément permettant de relier l'une à l'autre des plantes cultivées en pot disposées dans un seul pot, ce qui permet d'éliminer les inconvénients déplorés plus haut.

La fourniture d'un élément permettant de relier l'une à l'autre les plantes d'un même pot sans faire obstacle à leur croissance constitue donc un des objets de la présente invention. De cette façon on empêche qu'une ou plusieurs plantes ne soient extraites du pot.

Un autre objet de la présente invention est de fournir un élément qui, en plus de relier les plantes comme indiqué ci-dessus, constitue en lui-même une étiquette de durée déterminée sur laquelle peuvent figurer par exemple le nom du producteur et la variété des plantes ou de préférence une marque.

Compte tenu de ce qui est exposé ci-dessus, l'élément de liaison entre les plantes cultivées en pot est essentiellement un sceau de garantie, faisant preuve à l'acheteur de la provenance de la composition florale ainsi que du nombre des plantes.

Les caractéristiques ainsi que les avantages de l'élément objet de la présente invention apparaîtront de façon évidente d'après la description détaillée ci-après d'une de ses formes de réalisation non limitative, faite suivant les figures ci-jointes, à savoir:

la FIGURE 1 représente en plan et latéralement, en section partielle, l'élément objet de l'invention;

la FIGURE 2 représente l'élément en section appliqué à trois plantes (dont deux seulement sont visibles) dans un seul pot;

la FIGURE 3 illustre l'élément objet de l'invention, particulièrement apte à assurer l'oxygénation des plantes;

la FIGURE 4 représente l'élément muni d'autres moyens pour favoriser l'oxygénation des plantes.

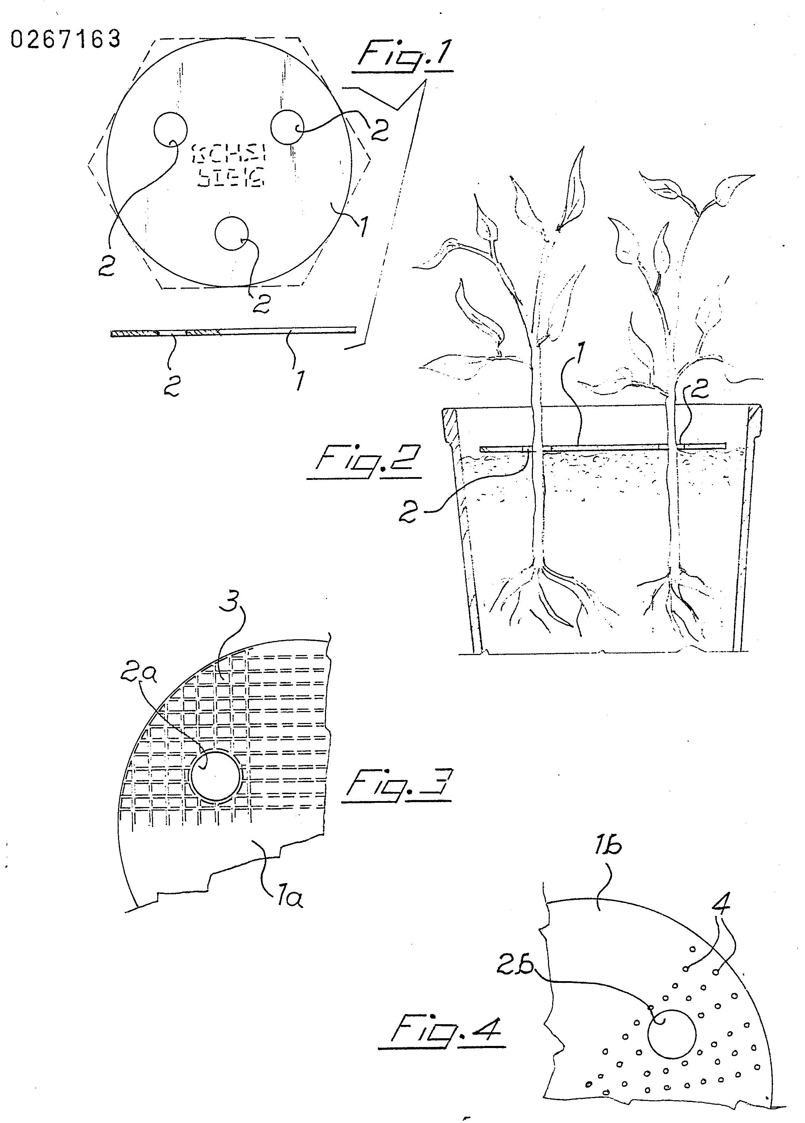

En nous reportant tout d'abord aux figures 1 et 2, l'élément objet de la présente invention est constitué d'un corps essentiellemert en forme de plaque repéré par 1, lequel, dans la forme de réalisation considérée, est circulaire; toutefois cette forme ne doit pas être considérée comme limitative, car une forme polygonale également (comme représentée en ligne pointillée) pourrait être tout aussi appropriée.

Le corps en forme de plaque 1 est doté de trois trous 2 disposés à égale distance l'un de l'autre, dort le diamètre est calculé pour permettre aux plantes de pousser sans rencontrer d'obstacles.

La figure 2 illustre l'élément ou corps en forme de plaque 1 utilisé dans la culture de trois plantes. Sur la figure 2 n'en sont visibles que deux, étant donné que sur cette figure l'élément 1 est représenté en section. Il apparaît notamment sur la figure 2 que le diamètre des trous 2 est sensiblement supérieur à la section transversale des plantes, lesquelles ne se ressentent en aucune façon de la présence de cet élément.

Sur la figure 3 l'élément objet de l'invention est représenté de façon partielle, étant donné qu'il est fondé sur la même idée innovatrice que l'élément illustré sur les figures 1 et 2. Lui aussi est en effet constitué d'un corps essentiellement en forme de plaque 1a, muni de trois trous 2a, dont un seul est représenté sur la figure 3.

La différence entre l'élément de la figure 1 et celui de la figure 3 réside seulement dans le type de matériel employé car, dans le cas de l'élément de la figure 3, ce dernier est un matériel grillagé indiqué par 3, pouvant être de n'importe quel type, en matière plastique par exemple.

L'élément de la figure 3 est particulièrement approprié pour favoriser l'oxygénation des plantes, car il permet le passge de l'air vers la terre pendant tout le temps durant lequel il reste en place dans le pot.

L'élément de la figure 4, qui est aussi représenté de façon partielle, étant lui aussi basé sur la même idée innovatrice que l'élément de la figure 1, est disposé comme l'élément de la figure 3, de façon à favoriser l'oxygénation des plantes. Dans ce cas également l'élément est constitué d'un corps en forme de plaque 1b, muni de trois trous 2b pour le passage des plantes, et en outre d'un grand nombre de petits trous 4 repartis de façon uniforme sur l'élément 1b, permettant ainsi le passage de l'air vers la terre.

De la description ci-dessus il apparaît de façon évidente que, les plantes ayant atteint un degré de floraison suffisant pour que le produit puisse être vendu, tel qu'illustré schématiquement sur la figure 2, l'élément 1 lie les plantes l'une à l'autre, constituant ainsi aussi bien un dispositif antivol qu'un sceau de garantie.

En ce qui concerne le second aspect ci-dessus mentionné de l'élément objet de l'invention, en se reportant à la figure 1 on voit qu'il est possible de disposer au centre de cet élément une inscription, une figure ou une indication quelconque servant à identifier le producteur ou la variété de la plante. Dans l'élément de la figure 1, les inscriptions ou figures pourront être placées dans n'importe quelle zone autour des trous 2, tandis qu'en ce qui concerne l'élément de la figure 3 et celui de la figure 4, il suffira de prévoir une ou plusieurs zones non grillagées (élément de la figure 3) ou sans trous (élément de la figure 4) pour parvenir au même but.

Si, par exemple, les éléments 1, 1a et 1b sont réalisés par moulage de matière plastique, il suffira d'obtenir au cours de cette même opération de moulage les inscriptions ou les figures ci-dessus mentionnées.

Compte tenu de ce qui est dit plus haut, l'élément objet de l'invention, outre le fait d'être un dispositif antivol et un sceau de garantie, atteint également le but important de constituer une étiquette inaltérable.

Les matériels utilisés pour la réalisation de l'élément 1 pourront être les plus variés car, outre la matière plastique, on pourra utiliser par exemple du papier, éventuellement imperméabilisé de façon appropriée, et d'une manière générale, un matériel quelconque relativement inaltérable avec le temps et tel qu'il ne détériore pas les plantes.

L'élément 1 pourra en outre être réalisé de telle sorte que le matériel dont il est constitué puisse s'imprégner des solutions nutritives ou antiparasitaires destinées aux plantes et céder graduellement à la terre se trouvant au-dessous les principes actifs absorbés précedemment. On pourra atteindre le même but également en prévoyant dans l'élément 1 des cavités à fond poreux ou perforé dans lesquelles on pourra placer des comprimés de ces mêmes principes actifs à l'état solide.

L'inaltérabilité du matériel à laquelle il a été fait allusion dépendra de toutes façons de la durée de permanence de l'élément dans le pot, allant pratiquement de l'ensemencement des plantes jusqu'au moment où la floraison a atteint le développement désiré. On peut évaluer ce temps à un an en moyenne.

Il est clair enfin que des variantes et/ou des modifications peuvent être apportées à l'élément objet de l'invention, sans pour cela sortir du cadre de protection de l'invention même.

## Revendications

1. Elément pour relier l'une à l'autre des plantes cultivées en pot disposées dans un seul pot, afin qu'il ne soit pas possible d'extraire de ce dernier une ou plusieurs de ces plantes, caractérisé par le fait d'être constitué d'un corps essentiellement en forme de plaque (1), doté d'un nombre de trous (2) égal au nombre des plantes cultivées dans le pot, lesdits trous (2) présentant un diamètre tel que les plantes puissent pousser librement.

2. Elément selon la revendication 1, caractérisé en ce que l'élément en forme de plaque (1) est de forme essentiellement discoïdale et à paroi pleine, sur laquelle sont reportées de façon inaltérable des inscriptions et/ou des figures.

3. Elément selon la revendication 1, caractérisé en ce que le corps en forme de plaque (1a) est essentiellement discoïdal et réalisé avec un matériel grillagé (3), une ou plusieurs zones étant prévues à paroi pleine pour l'apposition de façon inaltérable d'inscriptions et/ou de figures.

4. Elément selon la revendication 1, caractérisé en ce que le corps en forme de plaque (1b) est essentiellement discoïdal, et qu'autour des trous (2b) à travers lesquels se développeront les plantes, ont été pratiqués de nombreux petits trous (4), une ou plusieurs zones étant prévues à paroi pleine pour l'apposition de façon inaltérable d'inscriptions et/ou de figures.

0267163

Fig.1

Fig.2

Fig.3

Fig.4

BAD ORIGINAL

# RAPPORT DE RECHERCHE EUROPEENNE

Office européen
des brevets

Numéro de la demande

EP 87 83 0309

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-B-1 014 368 (FRIJLINK)<br>* Colonne 4, ligne 19 - colonne 5, ligne 9; figures 1-3 * | 1 | A 01 G 9/02 |
| A | EP-A-0 182 453 (HARRY)<br>* Page 3, ligne 29 - page 5, ligne 6; figures 1-3 * | 1,3 | |
| A | US-A-4 395 845 (MARKOWITZ)<br>* Revendications 1,5; figure 3 * | 1 | |
| A | US-A-2 721 022 (BILLERBECK)<br>* Whole document * | 1 | |
| A | EP-A-0 191 879 (HELMERS)<br>* Revendications 1,4; figures 1,2 * | 1,4 | |

DOMAINES TECHNIQUES
RECHERCHES (Int. Cl.4)

A 01 G
B 65 D

Le présent rapport de recherche a été établi pour toutes les revendications

| Lieu de la recherche | Date d'achèvement de la recherche | Examinateur |
|---|---|---|
| LA HAYE | 10-11-1987 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille, document correspondant

OEB Form 1503 03 82